# EUROPÄISCHE PATENTSCHRIFT

(11) **EP 0 731 767 B1**
(45) Veröffentlichungstag und Bekanntmachung des Hinweises auf die Patenterteilung: **14.04.1999**
(21) Anmeldenummer: 95932624.0
(22) Anmeldetag: 26.09.1995
(51) Int. Cl.: B65D 27/00

(54) **DIREKT AUS ALTPAPIER HERGESTELLTER BRIEFUMSCHLAG**
ENVELOPE DIRECTLY MADE OF USED PAPER
ENVELOPPE FAITE DIRECTEMENT A PARTIR DE VIEUX PAPIER

(30) Priorität: 01.10.1994 DE 4435316
(43) Veröffentlichungstag der Anmeldung: 18.09.1996
(73) Patentinhaber: Hagedorn, Olaf, 48149 Münster (DE)
(72) Erfinder: Hagedorn, Olaf, 48149 Münster (DE)
(86) Internationale Anmeldenummer: DE9501329
(87) Internationale Veröffentlichungsnummer: WO9610520

(56) Entgegenhaltungen:
- CH-A- 554 454
- CH-A- 566 445
- DE-A- 4 006 833
- FR-A- 797 774

## Beschreibung

Die vorliegende Erfindung bezieht sich auf Briefumschläge, die direkt aus Altpapier gefertigt werden.

Bekannt sind Briefumschläge, welche aus Altpapier recycelt hergestellt sind. Der Recyclingprozess umfaßt das Sammeln des Altpapiers, welches mit Wasser aufgeschwemmt, chargenweise gebleicht, getrocknet und zu Papierbahnen gewalzt wird. Aus den Papierbahnen werden neue Briefumschläge geschnitten oder gestanzt.

Die Zuschnitte dieser herkömmlichen Briefumschläge weisen im wesentlichen eine Breite von 230 mm bis 240 mm, insbesondere 235 mm und eine Höhe von 240 mm bis 250 mm, insbesondere 245 mm und im gefalteten Zustand eine Breite von 205 mm bis 215 mm, insbesondere 210 mm und eine Höhe von 105 mm bis 115 mm, insbesondere 110 mm auf.

So ist z.B. aus der DE 35 21773A1 die Verwendung quadratischer Zuschnitte zur Herstellung von Briefumschlägen bekannt, bei denen die vier Seitenlinien des in seinem gefalteten Zustand einteiligen Faltbriefes jeweils zugleich Faltlinien und Grundlinien eines dreieckigen Verschlußlappens sind, durch deren Umklappen zu einer Seitenlinie der Faltbrief als rechteckiger verschließbar ist und wobei einseitig mit Haftmittel versehene Streifen zum Festhalten des Verschlußlappen vorgesehen sind. Hierzu wird vorgeschlagen, daß das in der quadratischen Grundform beiderseits in Erscheinung tretende rechteckige Feld mit seinen Langseiten parallel zu einer Eckendiagonale des quadratischen Zuschnitts, aber unsymmetrisch angeordnet ist. Die innen zu liegenden Seitenflächen des zu faltenden Zuschnitts dienen als Mitteilungsseite, auf welcher der Briefsender z.B. zu übermittelnden Text festhalten kann. Ein derartig hergestelltes Briefformat soll dabei aufgrund seiner Ausgestaltung die Aufgabe lösen, einen Mitteilungsträger zur Verfügung zu stellen, der sich ähnlich handhaben läßt wie eine Postkarte, aber deren Nachteil des Nichtgeheimen vermeidet und vor allem mehr Raum bietet. Die einzige Einsparung ergibt sich dadurch, daß eine besondere Briefhülle nicht weiter erforderlich ist.

Weiterhin ist aus der FR-A-797774 bekannt, Briefumschläge aus vorgefertigten, rechtwinkligen Zuschnitten herzustellen. Hierzu sind auf den Zuschnitten mehrere Faltlinien derartig eingezeichnet, daß durch Falten des Zuschnitts entlang den Faltlinien mehrere Faltzungen gebildet werden, die nach Umklappen um jeweils 180° auf eine Seite des flachen Zuschnitts einander überlappen. Der derartig zwischen den Faltzungen und dem Zuschnitt geformte und eingefaßte Zwischenraum dient dann als Brieftasche zum Aufnehmen von zu versendenden Briefinhalt. Zum Befestigen der Faltzungen weisen dessen Kantenränder eine Gummierung auf, welche nach Befeuchten als Kleber dient. Der Vorteil der nach der FR-A-797 774 hergestellten Briefumschläge besteht darin, daß durch Verwendung rechtwinkliger Zuschnitte und den Verlauf der Faltlinien die Schnittverluste um bis zu 17% im Vergleich gegenüber herkömmlich hergestellten Papierzuschnitten für Briefumschlage geringer sind.

Nachteile bei der Herstellung herkömmlich recycelter Briefumschläge sind der hohe Verbrauch von Wasser, Energie und die Verwendung chemischer Zusätze als Bleichmittel, was eine insgesamt ungünstige Ökobilanz derartig hergestellter Briefumschläge bedingt.

Aufgabe der vorliegenden Erfindung ist es, diese genannten Nachteile bei der Herstellung von recycelten Briefumschlägen zu vermeiden und aus Altpapier gefertigte Briefumschläge zu schaffen, die bezüglich ihrer Herstellung eine deutlich geringere Umweltbelastung und damit eine wesentlich bessere Ökobilanz aufweisen.

Diese Aufgabe wird erfindungsgemäß durch die Merkmale des Anspruchs 1 gelöst. Gemäß Anspruch 1 ist ein erfindungsgemäßer Briefumschlag direkt aus Altpapier gefertigt, wobei auf die Verwendung von Wasser und den Einsatz chemischer Zusätze verzichtet wird, und wobei das als Ausgangsmaterial vorgesehene, sortierte Altpapier direkt auf den zur weiteren Verarbeitung vorgesehenen Zuschnitt geschnitten oder gestanzt wird und der Zuschnitt ohne chemische Behandlung zu einem Briefumschlag gefaltet wird. Die derartig hergestellten Briefumschläge besitzen gegenüber den herkömmlich recycelten Briefumschlägen den Vorteil des vollständigen Verzichts von die Umwelt belastenden chemischen Zusätzen, wie z.B. Bleichmitteln. Die nachträgliche, heute gesetzliche vorgeschriebene kostenintensive Entsorgung von die Umwelt schädigenden Stoffen entfällt bei dem erfindungsgemäßen Herstellungsprozeß vorteilhaft vollständig.

Weiterhin ergibt sich eine Energieeinsparung von ca. 98% durch Verzicht auf die chemische Aufbereitung des Altpapiers, wobei unterstellt wird, daß ca. 2% des bei herkömmlichen Herstellungsverfahren aufgewendeten Gesamtenergieverbrauchs für den Sortier,-Schneide,- und Faltvorgang weiterhin aufzubringen ist.

Ein weiterer Vorteil ergibt sich, wenn wie in Anspruch 2 vorgesehen ist, die Briefumschläge aus Zuschnitten gefaltet werden, die aus in großen Mengen als Altpapier zur Verfügung stehenden Zeitungs- bzw. Zeitschriftenformaten gefertigt sind.

Im folgenden ist ein Auszug handelsüblicher Zeitungen mit ihren Seitenformaten aufgeführt.

| Zeitung | Höhe (mm) | Breite (mm) |
|---|---|---|
| TV-Spielfilm | 295 | 230 |
| TV-Movie | 285 | 230 |
| Hör-Zu | 280 | 215 |
| MAX | 335 | 235 |
| fit | 325 | 240 |
| Chip | 295 | 210 |
| PC-Praxis | 295 | 210 |
| PC-Professional | 300 | 210 |
| DOS-International | 300 | 210 |
| amiga | 300 | 210 |
| windows-direkt | 300 | 210 |
| Pc-direkt | 300 | 210 |
| Prinz | 290 | 220 |
| Stern | 295 | 220 |
| Spiegel | 280 | 210 |
| focus | 265 | 215 |
| Bunte | 280 | 215 |
| Bild der Frau | 320 | 230 |
| die aktuelle | 265 | 210 |
| Neue Welt | 280 | 210 |
| Eltern | 280 | 215 |
| Brigitte | 280 | 215 |
| Freundin | 280 | 215 |
| Für Sie | 280 | 215 |
| Petra | 280 | 215 |
| Das goldene Blatt | 280 | 210 |
| cosmopolitan | 280 | 210 |

Aus dieser Liste entnimmt man, daß sämtliche, hier aufgeführten Zeitungen eine Mindesthöhe von 265 mm und eine Mindestbreite von 210 mm aufweisen. Die Mindestbreite von 210 mm muß um eine Verwertungstoleranz von 5 mm auf 205 mm reduziert werden. Die Verwertungstoleranz ergibt sich aus der Anordnung der Metallklammern oder des Klebstoffes, mit dem die einzelnen Seiten der Zeitungen zusammengehalten werden.

Ausgehend von den verwendeten Zeitungsformaten hat es sich als besonders vorteilhaft erwiesen, das Zeitungs- bzw. Zeitschriftenpapier gemäß den kennzeichnenden Merkmalen des Anspruchs 3 oder 4 oder 5 oder des Anspruchs 6 zuzuschneiden. Diese Zuschnitte sind vorzugsweise dazu geeignet, als einteiliger Zuschnitt zur Herstellung einteiliger Briefumschläge verwendet zu werden. Diese Briefumschläge weisen den Vorteil auf, daß zusätzliche Sortier- und Klebevorgänge, wie bei der Herstellung mehrteiliger Briefumschläge üblich, vermieden werden. Auch reduziert sich bei einteiligen Briefumschläge die Menge des ansonsten notwendigen Klebers, was die spätere Entsorgung der erfindungsgemäßen Briefumschläge nach Gebrauch erleichtert, da Klebstoffe in besonderer Weise zu entsorgen sind.

Hierdurch ist gewährleistet, daß Briefumschläge mit der Grundfläche von insbesondere 110 mm x 220 mm direkt aus Altpapier mit dem Format 205 mm x 265 mm in einem Stück hergestellt werden können.

Ein erfindungsgemäßer Briefumschlag weist gemäß Patentanspruch 7 auch ein Addressfenster auf, welches vorzugsweise auf der Innen- oder Außenseite des Briefumschlages dauerhaft mit diesem verbunden ist und mit diesem eine glatte Fläche bildet, wie mit den Merkmalen des Anspruchs 8 angegeben.

Gemäß Anspruch 13 wird weiterhin ein aus einem einteiligen Zuschnitt einstückig hergestellter Briefumschlag vorgeschlagen.

Weitere vorteilhafte Ausgestaltungen des Erfindungsgegenstandes sind in den Unteransprüchen angegeben bzw. in der nachstehenden Detailbeschreibung näher erläutert.

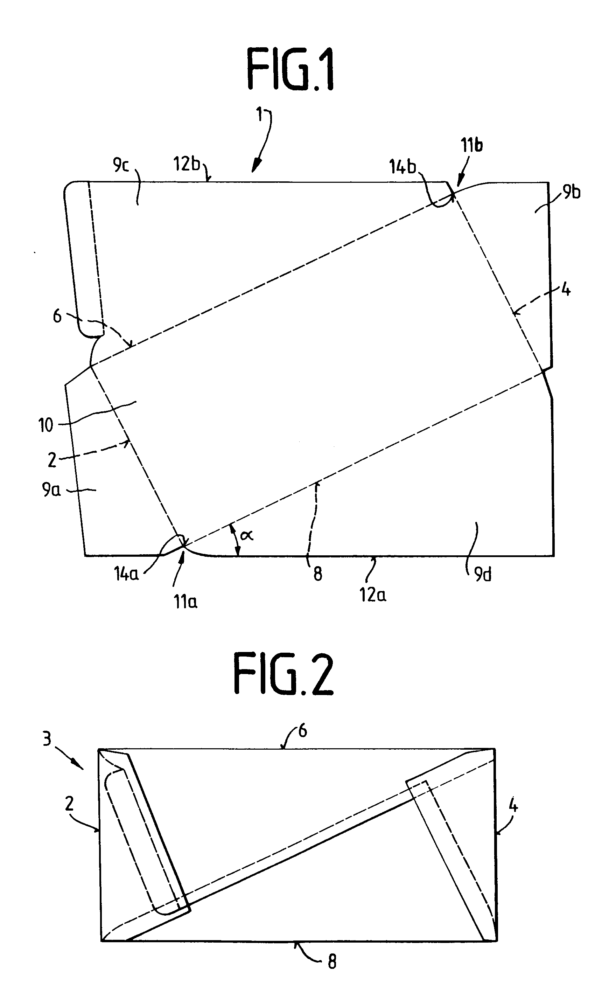

Ein Ausführungsbeispiel der Erfindung wird anhand der Figuren 1 und 2 näher erläutert. Es zeigen:
Fig. 1 einen Zuschnitt eines erfindungsgemäßen Briefumschlages und
Fig. 2 den in Fig.1 dargestellten Zuschnitt als gefalteten Briefumschlag.

Die obere (2), untere (4), rechte (6) und linke (8) Faltlinie bilden im wesentlichen ein Rechteck (10) mit den Seitenmaßen 90 mm bis 140 mm, insbesondere 110 mm mal 180 mm bis 250 mm, insbesondere 220 mm. Das Rechteck (10) ist derart in der Grundfläche des Zuschnitts (1) angeordnet, daß die linke Faltlinie (8) mit dem linken Außenrand (12a) des Zuschnitts (1) einen Winkel α von 5 Grad bis 85 Grad, insbesondere 26 Grad bildet. Die Rechteckspitzen (14a, 14b) weisen zu dem linken (12a) unteren und rechten (12b) Außenrand des Zuschnitts (1) jeweils einen Abstand von 0 mm bis 10 mm, insbesondere 5 mm auf.

Der linke (12a) untere und rechte (12b) Außenrand des Zuschnitts (1) weist Aussparungen (11a,11b) auf, die im wesentlichen dreieckig sind. Diese Dreiecke sind derart angeordnet, daß ihre längste Seite mit dem jeweiligem Außenrand (12a, 12b), und die ihr gegenüberliegende Spitze mit den jeweiligen Rechteckspitzen (14a, 14b) deckungsgleich sind.

Der Briefumschlag (3) kann als gefalteter Zuschnitt auf seiner Vorderseite, benachbart zur unteren (4) Faltlinie eine Codierzone aufweisen, welche die Abmessungen 140 mm x 15 mm besitzt. Weiterhin kann auf der Vorderseite des Briefumschlages (3) eine Freimachzone vorgesehen sein, welche benachbart zur oberen (2) Faltlinie angeordnet ist.

Die obere Faltlinie (2) ist zugleich eine Seitenlinie des Rechtecks (10) und Seitenlinie einer mit diesem Rechteck (10) verbundenen Papierlasche (9a). In analoger Art entsprechend sind die übrigen drei Rechteckseitenlinien des Rechtecks (10) jeweils zugleich Seitenlinie von drei weiteren Papierlaschen (9b,9c,9d), wobei die Seitenlinie (4) der Papierlasche (9b), die Seitenlinie (6) der Papierlasche (9c) und die Seitenlinie (8) der Papierlasche (9d) zugeordnet ist.

Die vier Papierlaschen (9a,9b,9c,9d) bilden jeweils die Verschlußlaschen des Briefumschlages (3). Hierzu sind die um die Seitenlinien (2,4,6,8) gefalteten Papierlaschen (9a,9b,9c,9d) mit einem Klebstoff versehen, der zur Klebung anzufeuchten ist oder mit einem Adhäsionsklebstoff, der durch Druck die Klebefunktion erfüllt. Der Briefumschlag (3) kann mit in den Abbildungen 1 und 2 nicht dargestellten Aufklebern versehen werden.

### Bezugszeichenliste

- 1: Zuschnitt
- 2: obere Faltlinie
- 3: Briefumschlag
- 4: untere Faltlinie
- 6: rechte Faltlinie
- 8: linke Faltlinie
- 9a: obere Papierlasche, Verschlußlasche
- 9b: untere Papierlasche, Verschlußlasche
- 9c: rechte Papierlasche, Verschlußlasche
- 9d: linke Papierlasche, Verschlußlasche
- 10: Rechteck
- 11a, 11b: Aussparung
- 12a: linker Außenrand
- 12b: rechter Außenrand
- 14a, 14b: Rechteckspitze
- α: Winkel

## Patentansprüche

1. Briefumschlag, gefertigt aus mindestens einem Zuschnitt, dadurch gekennzeichnet, daß der Zuschnitt (1) direkt aus Altpapier gestanzt oder geschnitten wird, welches nicht durch Verwendung chemischer Zusatzstoffe und von Wasser aufbereitet oder vorbehandelt ist.

2. Briefumschlag nach Anspruch 1, dadurch gekennzeichnet, daß das Altpapier aus mindestens einer Seite einer alten Zeitung besteht.

3. Briefumschlag nach Anspruch 1 und / oder 2, dadurch gekennzeichnet, daß der Zuschnitt (1) des Briefumschlags (3) die Außenmaße von 190 mm bis 240 mm x 270 mm bis 340 mm nicht übersteigt

4. Briefumschlag nach mindestens einem der Ansprüche 1 bis 3, dadurch gekennzeichnet, daß der Zuschnitt (1) Außenmaße aufweist, die das Format von 205 mm x 265 mm nicht übersteigen.

5. Briefumschlag nach mindestens einem der Ansprüche 1 bis 4, gekennzeichnet durch ein Grundformat von 90 mm bis 140 mm x 180 mm bis 250 mm im gefalteten Zustand , wobei die langen Faltlinien (6,8) mit den langen Außenrändern (12a,12b) des Zuschnitts (1) im wesentlichen einen Winkel α von 5 Grad bis 85 Grad bilden.

6. Briefumschlag nach mindestens einem der Ansprüche 1 bis 5, dadurch gekennzeichnet, daß die langen Faltlinien (6,8) mit den langen Außenrändern des Zuschnitts (1) im wesentlichen einen Winkel α von 26 Grad bilden.

7. Briefumschlag nach mindestens einem der Ansprüche 1 bis 6, dadurch gekennzeichnet, daß der Briefumschlag (3) ein Addressfenster aufweist.

8. Briefumschlag nach Anspruch 7, dadurch gekennzeichnet, daß das Fenster auf der Innen- oder Außenseite des Umschlags dauerhaft mit ihm verbunden ist und mit ihm eine glatte Fläche bildet.

9. Briefumschlag nach mindestens einem der vorhergehenden Ansprüche, dadurch gekennzeichnet, daß sich im gefalteten Zustand auf der Vorderseite eine Codierzone am unteren Rand von 140 mm x 15 mm und / oder eine Freimachzone am oberen Rand befindet.

10. Briefumschlag nach mindestens einem der vorhergehenden Ansprüche, dadurch gekennzeichnet, daß eine obere (9a) oder untere (9b) oder rechte (9c) oder linke (9d) Papierlasche Verschlußlasche ist.

11. Briefumschlag nach mindestens einem der vorhergehenden Ansprüche, dadurch gekennzeichnet, daß die Verschlußlasche (9a,9b,9c,9d) mit einem Klebstoff, der zur Klebung anzufeuchten ist, oder mit einem Adhäsionsklebstoff, der durch Druck die Klebefunktion erfüllt, versehen ist.

12. Briefumschlag nach mindestens einem der Ansprüche 1 bis 11, dadurch gekennzeichnet, daß der Briefumschlag (3) mit Aufklebern versehen ist.

13. Briefumschlag nach mindestens einem der Ansprüche 1 bis 12, dadurch gekennzeichnet, daß der Briefumschlag (3) aus einem einteiligen Zuschnitt (1) einstückig hergestellt ist.

## Claims

1. Envelope, manufactured from at least one blank, characterized in that the blank (1) is punched or cut directly from waste paper, which is not processed or pretreated using chemical additives or water.

2. Envelope according to claim 1, characterized in that the waste paper comprises at least one page of an old newspaper.

3. Envelope according to claim 1 and/or 2, characterized in that the blank (1) of the envelope (3) does not exceed the outer dimensions of 190 mm to 240 mm x 270 mm to 340 mm.

4. Envelope according to at least one of claims 1 to 3, characterized in that the blank (1) has outer dimensions which do not exceed the format of 205 mm x 265 mm.

5. Envelope according to at least one of claims 1 to 4, characterized by a basic format of 90 mm to 140 mm x 180 mm to 250 mm in the folded state, the long fold lines (6, 8) being substantially at an angle α of 5° to 85° to the long outside edges (12a, 12b) of the blank (1).

6. Envelope according to at least one of claims 1 to 5, characterized in that the long fold lines (6, 8) are substantially at an angle α of 26° to the long outside edges of the blank (1).

7. Envelope according to at least one of claims 1 to 6, characterized in that the envelope (3) has an address window.

8. Envelope according to claim 7, characterized in that the window is permanently joined to the inside or outside of the envelope and with the latter forms a smooth surface.

9. Envelope according to at least one of the preceding claims, characterized in that in the folded state there is situated at the front side a code zone at the bottom edge of 140 mm x 15 mm and/or a franking zone at the top edge.

10. Envelope according to at least one of the preceding claims, characterized in that a top (9a) or bottom (9b) or right (9c) or left (d) paper flap is a closure flap.

11. Envelope according to at least one of the preceding claims, characterized in that the closure flap (9a, 9b, 9c, 9d) is provided with a gum, which is to be moistened for sticking purposes, or with a contact adhesive which is stuck down by pressure.

12. Envelope according to at least one of claims 1 to 11, characterized in that the envelope (3) is provided with stickers.

13. Envelope according to at least one of claims 1 to 12, characterized in that the envelope (3) is manufactured integrally from a one-piece blank (1).

## Revendications

1. Enveloppe pour courrier, fabriquée à partir d'au moins un flan, caractérisée par le fait que l'on obtient directement, par estampage ou découpage, le flan (1) à partir de vieux papier qui n'est pas préparé ou traité par emploi d'additifs chimiques et d'eau.

2. Enveloppe selon la revendication 1, caractérisée par le fait que le vieux papier est constitué d'au moins une page d'un vieux magazine.

3. Enveloppe selon la revendication 1 et/ou 2, caractérisée par le fait que le flan (1) de l'enveloppe (3) ne dépasse pas les dimensions extérieures de 190 mm à 240 mm x 270 mm à 340 mm.

4. Enveloppe selon au moins l'une des revendications 1 à 3, caractérisée par le fait que le flan (1) présente des dimensions extérieures qui ne dépassent pas le format de 205 mm x 265 mm.

5. Enveloppe selon au moins l'une des revendications 1 à 4, caractérisée par un format de base de 90 mm à 140 mm x 180 mm à 250 mm à l'état plié, les grandes lignes de pliage (6, 8) formant sensiblement avec les grands bords extérieurs (12a, 12b) du flan (1) un angle α de 5 degrés à 85 degrés.

6. Enveloppe selon au moins l'une des revendications 1 à 5, caractérisée par le fait que les grandes lignes de pliage (6, 8) forment sensiblement avec les grands bords extérieurs du flan (1) un angle α de 26 degrés.

7. Enveloppe selon au moins l'une des revendications 1 à 6, caractérisée par le fait que l'enveloppe (3) présente une fenêtre pour l'adresse.

8. Enveloppe selon la revendication 7, caractérisée par le fait que la fenêtre, sur la face intérieure ou extérieure de l'enveloppe, est réunie de façon permanente à cette enveloppe et forme avec elle une surface lisse.

9. Enveloppe selon au moins l'une des revendications précédentes, caractérisée par le fait qu'à l'état plié, sur la face avant, se trouve au bord inférieur une zone de codage de 140 mm x 15 mm et/ou sur le bord supérieur une zone d'affranchissement.

10. Enveloppe selon au moins l'une des revendications précédentes, caractérisée par le fait qu'une languette de papier supérieure (9a) ou inférieure (9b) ou droite (9c) ou gauche (9d) est une languette de fermeture.

11. Enveloppe selon au moins l'une des revendications précédentes, caractérisée par le fait que l'enveloppe de fermeture (9a, 9b, 9c, 9d) est munie d'une colle qu'il faut mouiller pour le collage ou d'un adhésif qui remplit la fonction de collage par pression.

12. Enveloppe selon au moins l'une des revendications 1 à 11, caractérisée par le fait que l'enveloppe (3) est munie d'étiquettes à coller.

13. Enveloppe selon au moins l'une des revendications 1 à 12, caractérisée par le fait que l'enveloppe (3) est fabriquée en une seule pièce à partir d'un flan monopièce (1).
